# EUROPEAN PATENT APPLICATION

(11) **EP 2 975 709 A1**
(43) Date of publication of application: **20.01.2016**
(21) Application number: 14176962.0
(22) Date of filing: 14.07.2014
(51) Int. Cl.: H02B 13/00, H02B 13/045, H02B 13/035, H02G 5/00

(54) **High or medium voltage electrical connection assembly and related network grid and power substation comprising such assembly**

(71) Applicant: ABB Technology AG, 8050 Zürich (CH)
(72) Inventor: Cameroni, Roberto, 20100 Milano (IT); Piazza, Costante, 26900 Lodi (IT); Spiranelli, Massimo, 26017 Trescore Cremasco (CR) (IT)
(74) Representative: De Santis, Giovanni

(57) **Abstract**

A high or medium voltage electrical assembly (100) comprising
- a first electrical apparatus (1) comprising a first housing (2) containing an associated insulating medium (3) and at least a first electrical device (4);
- a second electrical apparatus (11) comprising a second housing (12) containing a corresponding insulating medium (13) and at least a second electrical device (14)
and further comprises
- a connection device (200) operatively connecting said first electrical apparatus (1) with said second electrical apparatus (11) and configured so as to have an inner closed space (201) containing a related electrically insulating fluid (202), wherein said connection device (200) comprises at least outer telescopic means (220, 231) which mechanically interconnect, in a removable manner, said first housing (2) with said second housing (12), and coupling means (210) which are positioned at least partially inside said inner closed space (201) and connect electrically, in a detachable manner, said at least first electrical device (4) with said at least second electrical device (14).

Fig 4.

## Description

The present disclosure relates to a high or medium voltage electrical assembly, i.e. for applications with nominal operating voltages above 1kV, and to an electric grid and an electric power substation comprising such a high or medium voltage electrical assembly. As known in the art, in the field of high or medium voltage power transmission and distribution, several devices are used along the path of a power grid in order to efficiently and safely supply electricity from power generating sources to loads and users connected to the feeding grid.

Typical examples of such devices are for instance power transformers, circuit breakers, disconnectors, hybrid switchgear, et cetera.

Depending on the applications various devices are grouped so as to form substations configured according to different layouts; over the years, many solutions have been proposed for such layouts aimed at achieving an optimum balance between capabilities to perform the required performances and needs to reduce manufacturing and installation costs, as well as space occupation.

To this end, manufactures have proposed solutions combining in a single apparatus devices and functions previously carried out by separate and structurally independent components; an example of such devices is described for example in patent document EP1121738, wherein a circuit breaker and a combined disconnector-earthing switch device are used in combination within a single casing of a hybrid switchgear.

Basically, these devices have a casing inside which there are provided one or more fixed contacts and corresponding movable contacts; the movable contacts, when actuated, electrically engage or disengage each with/from an associated fixed contact so as to realize desired circuital configurations of the electrical network along which the device is installed. In addition, some solutions combine the interoperability and mutual construction of various apparatuses in order to further streamline manufacturing, assembling, tests and installation phases; an example of such solutions is for example described in patent document EP1113547.

Hence, with these solutions, on the one hand a plurality of desired circuital configurations can be realized with a more compact structure; but, on the other hand, there are some aspects which may be critical for example as regard to maintenance or replacement interventions.

Indeed, when two or more devices are combined, if any of the combined devices or parts thereof has to be replaced or serviced, it is necessary to shut down the entire assembly and therefore to put out of service all devices operatively interconnected, even for a long time. Sometimes, due to the achieved mutual functional and structural interoperability of the various devices combined, it is necessary to dismantle an entire assembly and not only a faulty part, thus putting out of work also devices still correctly functioning.

In addition, another critical aspect of such combinations relates to the dielectric insulation among the various parts.

In fact, dielectric insulation among live parts must be properly respected without any leakage of the insulating fluid(s) used and without mixing them when the various devices combined use different insulating fluids.

The present disclosure is aimed at facing such issues, and provides a high or medium voltage electrical assembly comprising at least:
- a first electrical apparatus comprising a first housing containing an associated insulating medium and at least a first electrical device;
- a second electrical apparatus comprising a second housing containing a corresponding insulating medium and at least a second electrical device;
   characterized in that it further comprises a connection device operatively connecting said first electrical apparatus with said second electrical apparatus and configured so as to have an inner closed space containing a related electrically insulating medium, wherein said connection device comprises at least outer telescopic means which mechanically interconnect, in a removable manner, said first housing with said second housing, and coupling means which are positioned at least partially inside said inner closed space and connect electrically, in a detachable manner, said at least first electrical device with said at least second electrical device.

Further, the present disclosure also provides an electric grid and also an electric substation comprising a high or medium voltage electrical assembly as defined in the appended claims and described hereinafter.

Further characteristics and advantages of the present disclosure will become better apparent from the description of preferred but not exclusive embodiments of a high or medium voltage electrical assembly according to the disclosure, illustrated only by way of non-limitative examples in the accompanying drawings, wherein:
figure 1 is perspective view illustrating a first exemplary embodiment of an electrical assembly according to the present disclosure;
figure 2 is a side view illustrating the assembly of figure 1 with one apparatus disconnected from the rest of an electrically assembly according to the present disclosure;
figure 3 is a side view illustrating in greater details a first exemplary embodiment of a connection device used in an electrical assembly according to the present disclosure;
figure 4 is a cross section of figure 3;
figures 5 and 6 illustrate successive steps when detaching one apparatus from the rest of an electrical assembly according to the present disclosure;
figure 7 illustrates another exemplary embodiment of an electrical assembly according to the present disclosure;
figure 8 is a top view illustrating the electrical assembly of figure 7 with apparatuses disconnected from each other;
figure 9 is a side view illustrating in greater details an exemplary embodiment of a connection device used in the electrical assembly of figure 7;
figure 10 is a cross section of figure 9;
figures 11-12 are side views illustrating successive steps when detaching apparatuses of an electrical assembly according to the present disclosure.
figures 13 and 14 schematically illustrate further exemplary embodiments of a connection device which can be used in an electrical assembly according to the present disclosure; figure 15 schematically represents an exemplary first electrical apparatus that can be used in an electrical assembly according to the present disclosure.

It should be noted that in the detailed description that follows, identical or similar components, either from a structural and/or functional point of view, may have the same reference numerals, regardless of whether they are shown in different embodiments of the present disclosure; it should also be noted that in order to clearly and concisely describe the present disclosure, the drawings may not necessarily be to scale and certain features of the disclosure may be shown in somewhat schematic form.

With reference to the above cited figures, the high- or medium-voltage electrical assembly according to the present disclosure is indicated by the overall reference number 100 and hereinafter will be referred to as "the assembly 100" for the sake of simplicity.

The assembly 100 comprises at least:
- a first electrical apparatus 1 comprising a first housing 2 containing an associated (hereinafter "first") insulating medium 3, and at least a first electrical device 4;
- a second electrical apparatus 11 comprising a second housing 12 containing a corresponding (hereinafter "second") insulating medium 13 and at least a second electrical device 14.

The first electrical apparatus 1 and the second electrical apparatus 11 can be any type of suitable known apparatuses and having a respective housing or casing 2, 12 inside which there are positioned one or more electrical devices 4, 14, used alone or in combination. Preferably, at least one of, more preferably both, said first electrical device 4 and second electrical device 14 comprise a high or medium voltage electrical device, such as disconnectors, circuit breakers, earthing switches, transformers, et cetera.

As above indicated, each housing 2, 12 usually contains an insulating medium 3, 13, namely a medium having dielectric property which can be constituted by a gas, e.g. SF6, compressed air, gas mixtures, or a liquid, e.g. a mineral or vegetal oil, or any other suitable medium having dielectric properties.

Depending on the specific applications and in particular on the type of electrical devices used inside each housing, the electrically insulating media 3, 13 can be used in the total internal volume delimited by the respective housings 2, 12 or just to fill a part thereof; further, each internal housing can be partitioned in two or more separate spaces each containing a corresponding insulating medium which will be indicated anyhow by the reference number 3 or 13 for the sake of simplicity.

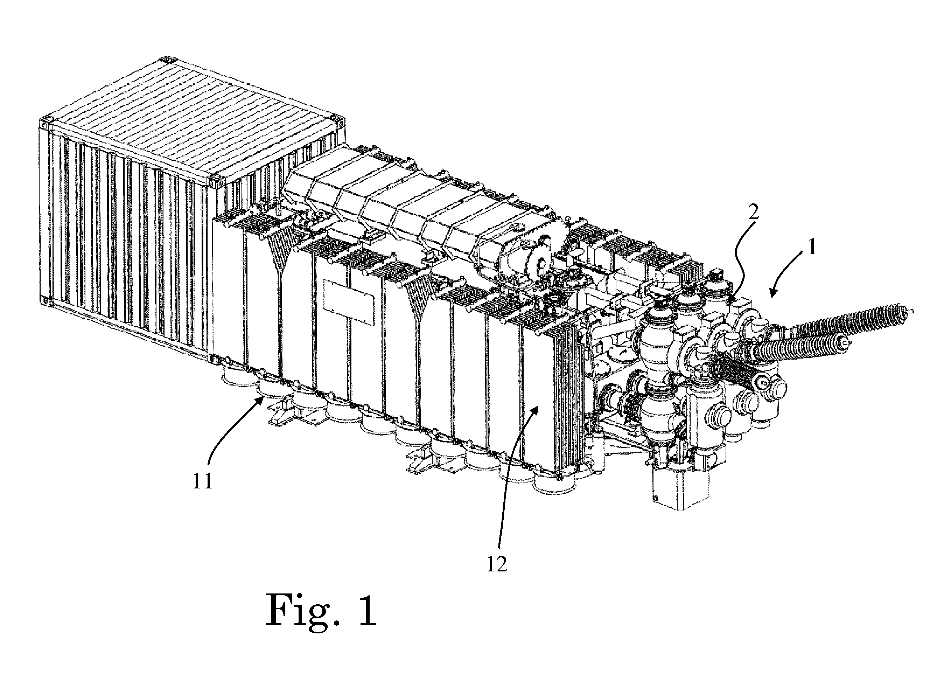

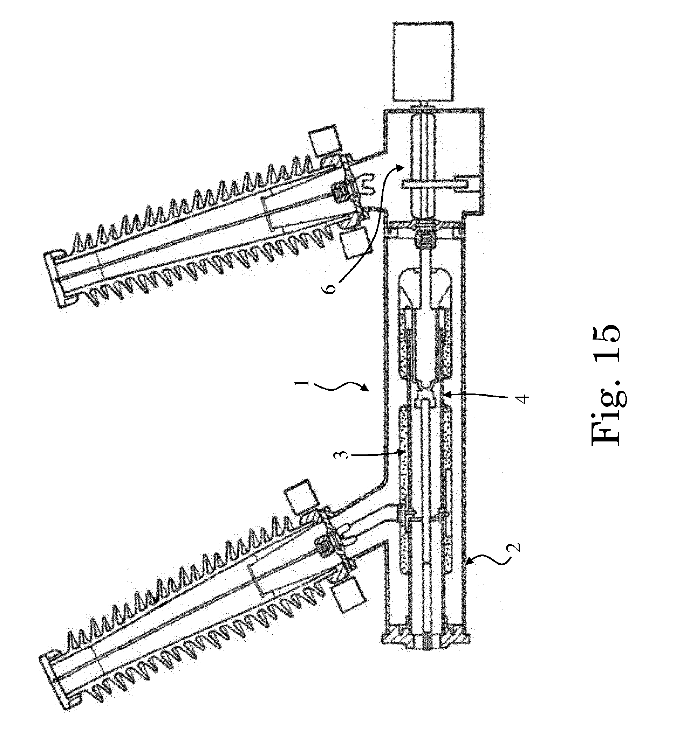

In the exemplary embodiment of figures 1-6, the first electrical apparatus 1 is for instance a gas-insulated switchgear or hybrid switchgear, e.g. of the type produced and marketed by the ABB group under the commercial name of PASS, one example of which is for instance illustrated in figure 15.

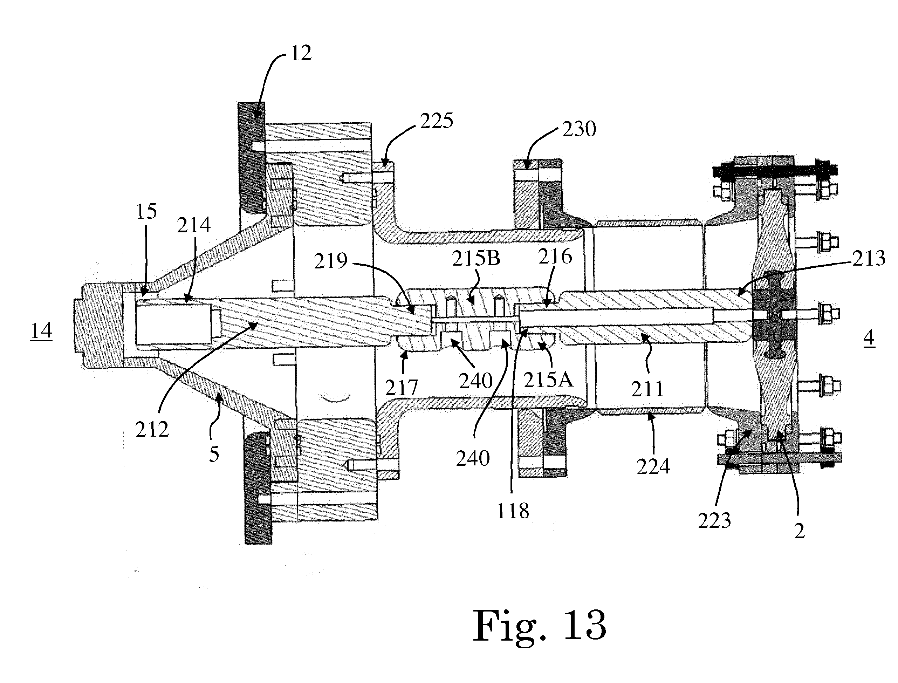

Such exemplary switchgear 1 comprises a housing or casing 2 inside which there are positioned, for instance, a circuit breaker 4 containing an electrical insulating medium schematically indicated in figure 13 by the reference number 3, e.g. SF6, and a disconnector 6 placed in an internal space containing for instance air or compressed air as insulating medium 3.; the circuit breaker 4 and the disconnector 6 are connected in series to each other and are suitable to be connected in input to and output from the switchgear itself.

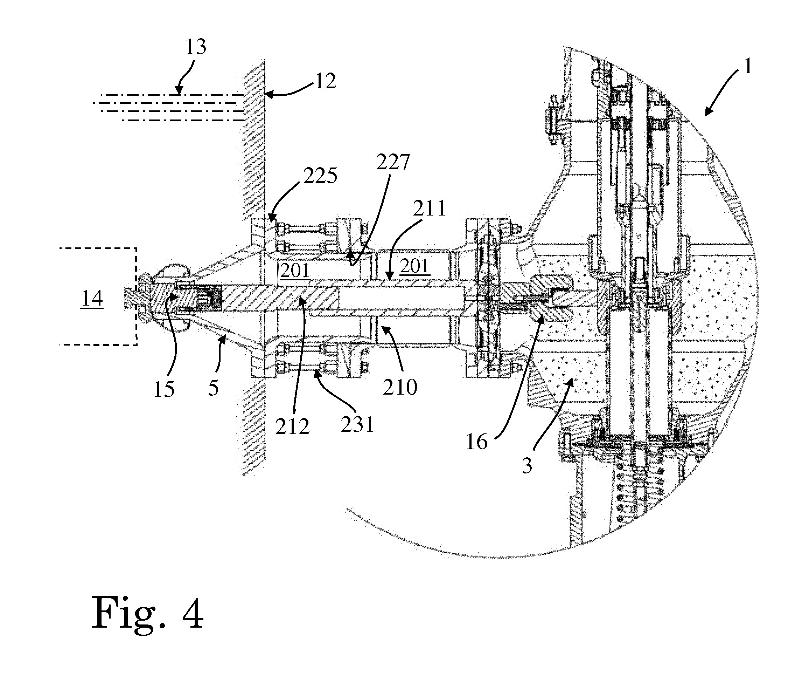

The illustrated exemplary second apparatus 11 is a known type of liquid-filled power transformer, wherein the second housing 12 is constituted by the tank of the transformer and the electrical device 14 is constituted by the active parts of the transformers itself, namely the core and the windings, which are immersed in a cooling and insulating medium, namely a liquid such as a vegetal or mineral oil, schematically represented in figure 4 by the reference number 13.

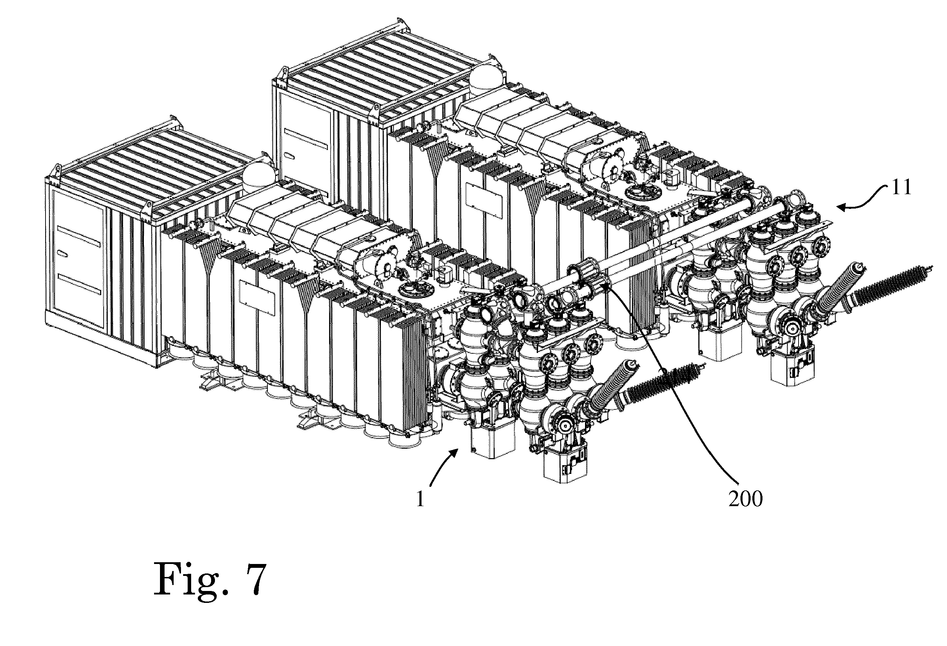

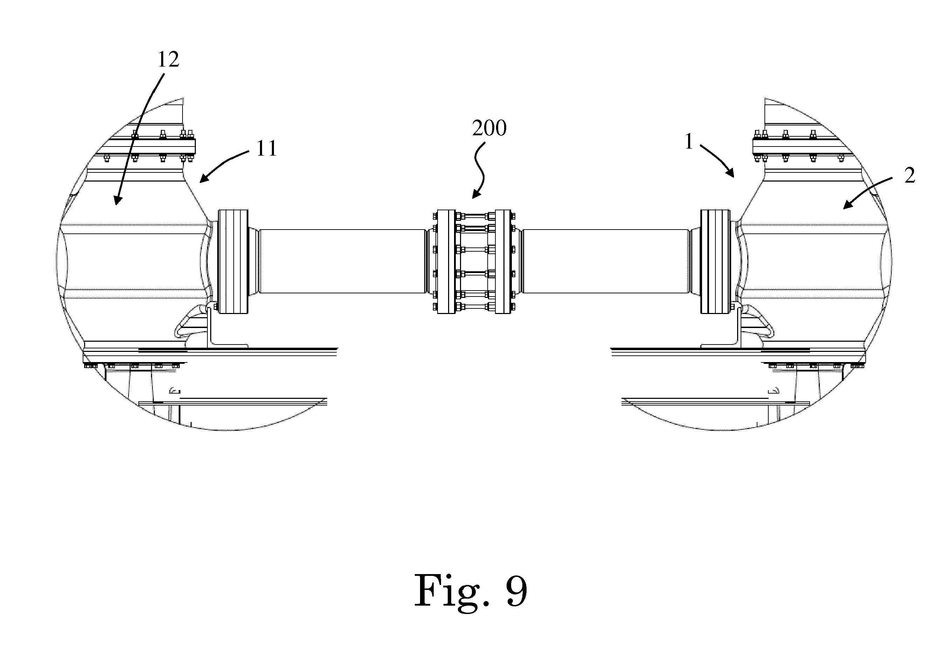

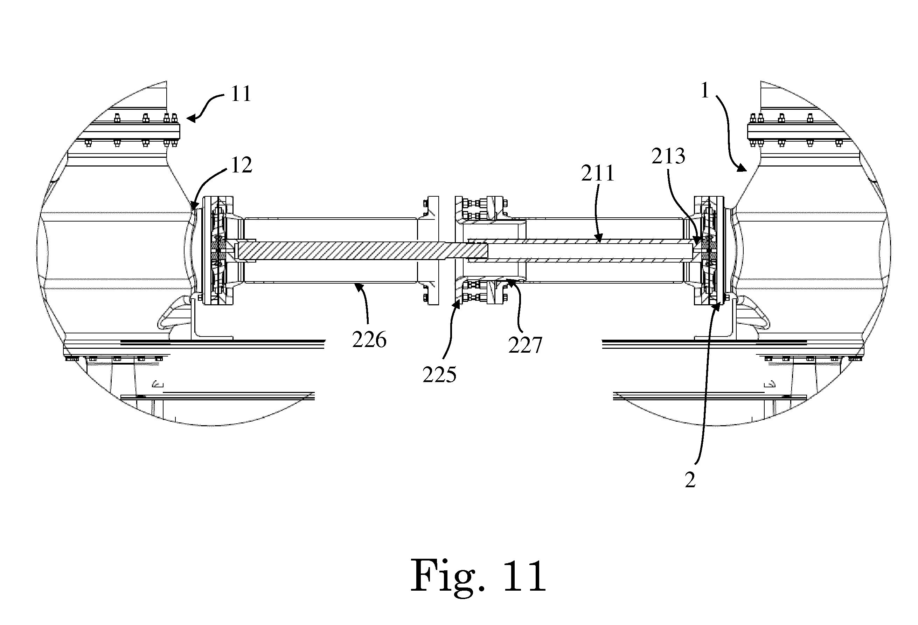

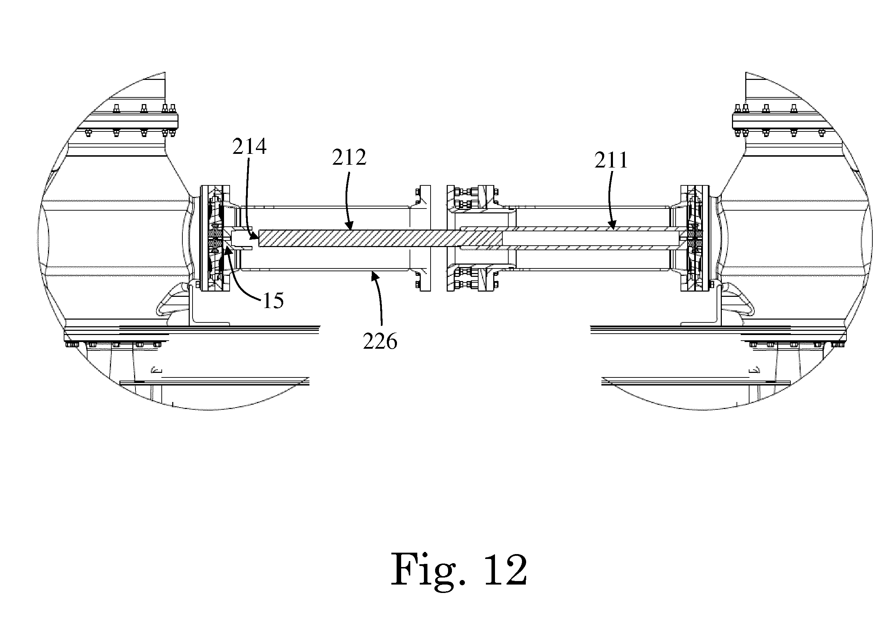

In the exemplary embodiment of figures 7-12, the first and second electrical apparatuses 1 and 11 are similar or identical to each other and are constituted both by two gas-insulated or hybrid switchgear of the type above indicated and illustrated in figures 1-6, and 15. Clearly, the illustrated embodiments have to be understood as exemplary and non-limiting ones; in addition, the first and second insulating media, although indicated with different reference numbers 3, 13 can be identical to each other.

Advantageously, the assembly 100 further comprises a connection device, indicated by the overall reference number 200, which operatively connects, e.g. mechanically and electrically, the first electrical apparatus 1 with the second electrical apparatus 11.

As will be described in details hereinafter, the connection device 200 is configured so as to delimit an internal closed space 201 containing a related (hereinafter "third") electrically insulating medium 202 and is preferably hermetically sealed so as to prevent leakages.

The third electrically insulating medium 202 can be the same as the first or second insulating media 3, 13, and can be for example a gas, such as SF6, or any suitable medium having adequate dielectric properties.

In particular, the connection device 200 comprises at least outer telescopic means 220 which mechanically interconnect, directly or indirectly, and in a removable manner, the first electrical apparatus 1 and the second electrical apparatus 11, and in particular their respective first housing 2 with the second housing 12.

With the terms directly or indirectly it is hereby meant a direct connection or a connection with interposition of one or more additional pieces, respectively.

The connection device 200 comprises also coupling means 210 which are positioned at least partially inside the inner closed space 201 and connect electrically, in a detachable manner, the at least first electrical device 4 with the at least second electrical device 14.

In the exemplary embodiments illustrated, the coupling means 210 comprise: a first connector 211 made of electrically conducting material which is suitable to be electrically connected to the first electrical device 4 of the first electrical apparatus 1; and a second connector 212 made of electrically conducting material which is suitable to electrically connect the first connector 211 with a corresponding electrically conducting portion 15 associated to the second electrical device 14 of the second electrical apparatus 11.

In particular, the first and second connectors 211, 212 are mutually associated to each other so as to move one relative to the other when separating the first electrical apparatus 1 from the second electrical apparatus 11.

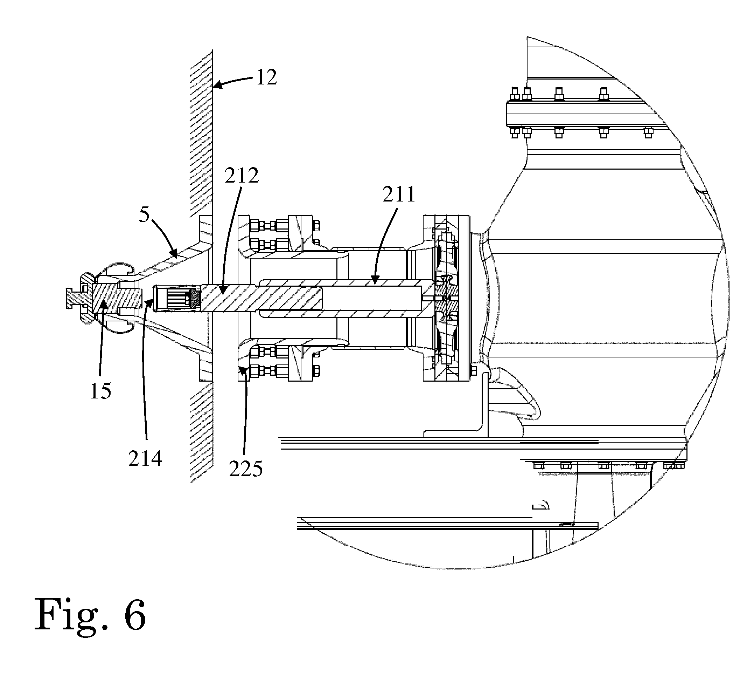

Preferably, the second connector 212 is connected to the conducting portion 15 associated with the second electrical device 14 of the second electrical apparatus 11 in a detachable manner, as for example illustrated in figure 6.

In the exemplary embodiments illustrated, the first connector 211 comprises a hollow tubular body which is mechanically connected, at its one end portion 213, to the first electrical apparatus 1 and is solidly movable therewith; the first connector 211 is made of electrically conducting material and is electrically connected to the first electrical device 4 of the first electrical apparatus 1.

As illustrated, the second connector 212 comprises for instance a substantially rod-shaped body made of electrically conducting material.

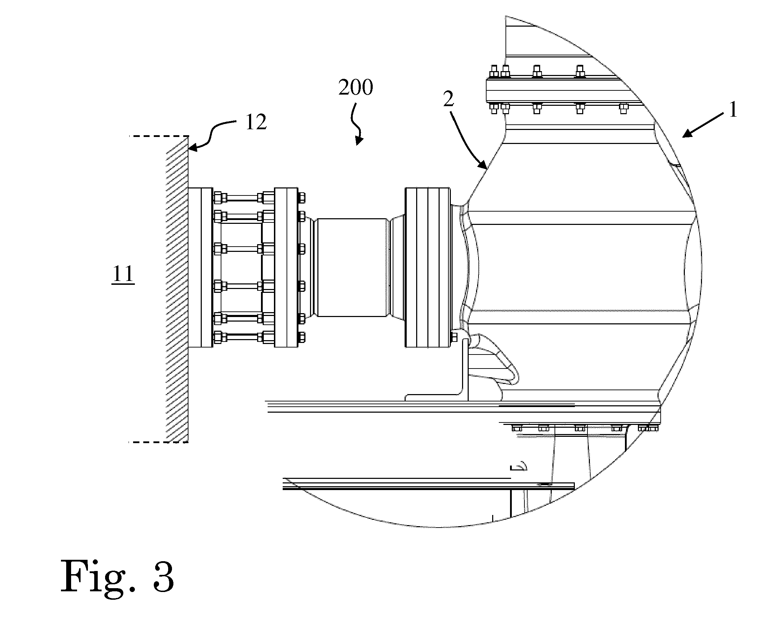

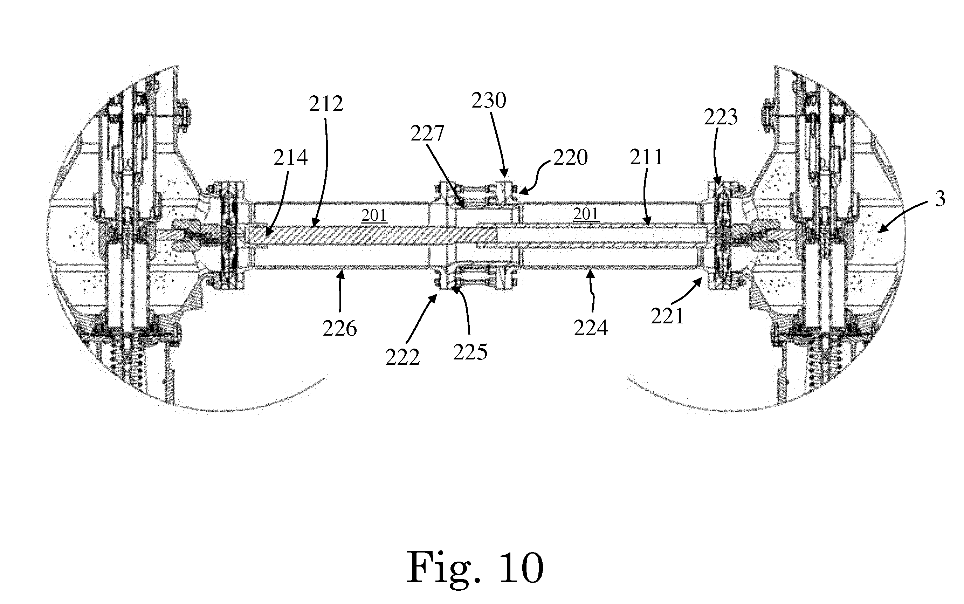

As illustrated in the exemplary embodiments of figures 3-6 and 9-12, the first connector 211 and the second connector 212 are operatively coupled to each other in a telescopic manner. In particular, according to this embodiment, the rod-shaped body of the second connector 212 is suitable to enter at least partially inside and to get in surface electrical contact with the hollow tubular element 211, as for example illustrated in figures 4 and 10.

In particular, and as illustrated in figures 4-6 and 10-12, the rod-shaped body 212 is inserted sliding inside the hollow tubular body of the first connector 211 between a first position where a free end 214 of the rod-shaped body 212 is electrically connected with a corresponding electrically conducting portion 15 associated with the second electrical device 14, and a second position where the rod-shaped body 212 is partially retracted inside the hollow tubular body 211 and the free end 214 is electrically disconnected and mechanically detached from the corresponding electrically conducting portion 15.

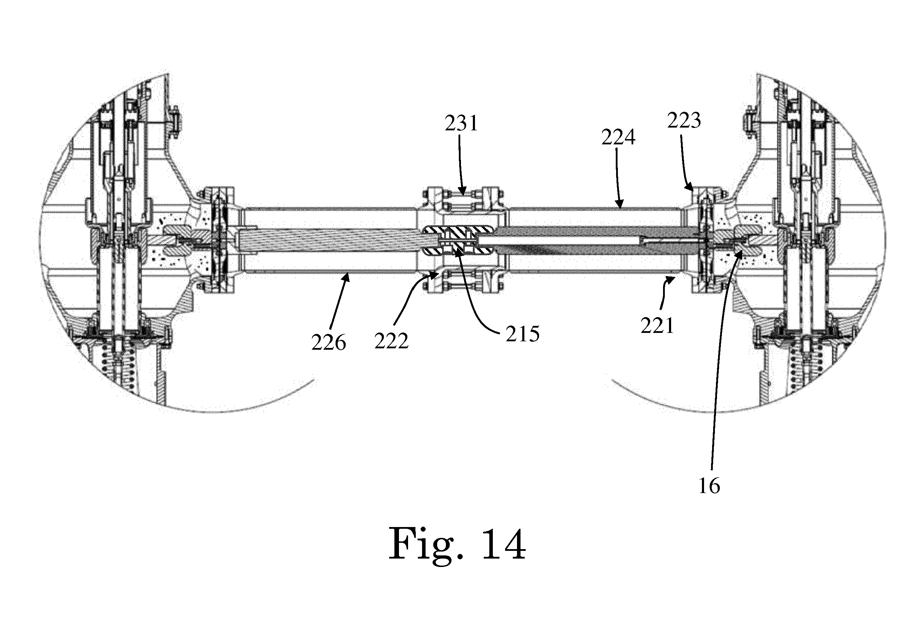

In the exemplary embodiment illustrated in figures 13 and 14, the coupling means 210 comprise a third connector 215 which is made of electrically conducting material and is positioned between the first connector 211 and the second connector 212; the third connector 215 electrically interconnects, in a detachable manner, the first and second connectors 211, 212.

In particular, as illustrated for example in figure 13, the third connector 215 comprises two-half shells 215A, 215B which are mechanically connected to each other and have end portions 216, 217 shaped so as to clamp associated end portions 218, 219 of the first connector 211 and the second connector 212, respectively.

In the exemplary embodiments illustrated, the two half-shells 215A and 215B are mutually connected for example by means of screw removably screwed into corresponding holes 240.

In the exemplary embodiments illustrated, the outer telescopic means 220 comprise a first flange component 221 which is suitable to be mechanically connected, directly or indirectly, to the first housing 2, and a second flange component 222 which is suitable to be mechanically connected, directly or indirectly, to the second housing 12; preferably, the first and second flange components 221, 222 are mutually coupled so as to delimit the closed inner space 201 (when connected to the first and second housings 2, 12, respectively) and to move one relative to the other when at least one of the first and second flange components 221, 222 is detached from the corresponding first or second housing 2, 12. The first flange component 221 has a first base portion 223 which is suitable to be mechanically connected to the first housing 2 or to a component mechanically secured to the first housing 2, and a first sleeve-shaped portion 224 which protrudes from the first base portion 223 and for example surrounds at least partially the first connector 211.

In particular, in the exemplary embodiments illustrated in the attached figures, the first flange component 221 is mechanically connected directly onto the housing 2 of the first electrical apparatus 1, e.g. by screwing; alternatively, it would be possible to connect mechanically the first flange component 221 with another component (not illustrated) which in turn is mechanically secured onto the housing 2.

In both cases, the first flange component 221 is connected to the housing 2 so as to be suitable to move together and solidly with the first housing 2, when separating the first electrical apparatus 1 from the second electrical apparatus 11.

The second flange component 222 has a second base portion 225 which is connected to the second housing 12 or to a component mechanically secured to the second housing 12, and a second sleeve-shaped portion 227 which protrudes from said second base portion 225 and is suitable to slide relative to the first sleeve-shaped portion 224 (inside or outside it) when the second flange component 222 is detached from the second housing 12 or from the component mechanically secured to the second housing 12.

For instance, in the exemplary embodiment illustrated in figures 4-6, the second flange component is directly connected, e.g. screwed, to the second housing 12; in the exemplary embodiment illustrated in figures 10-12 instead, the second flange component 222 is mechanically connected, e.g. screwed, onto an additional component 226 which in turn is mechanically connected, e.g. screwed, onto the second housing 12 of the second electrical apparatus 11.

In the exemplary embodiments illustrated in figures 3-6 and 9-12, the connection device 200 further comprises a third flange element 230 which is positioned around the outer surface of the second sleeve-shaped portion 227 of the second flange component 222, and a plurality of tie-rods 231 which mechanically interconnect the third flange element 230 with the base portion 225 of the second flange component 222.

Such a third flange 230 and plurality of tie-rods 231 can be used similarly in the embodiment of figures 13 and 14 (tie-rods 231 illustrated only in figure 14 for the sake of simplicity).

When the electrically insulating media 3, 13, 202 used differ from each other, the assembly 100 may further comprise one or more separating barriers placed at the interface between two differing insulating media, and realized for example of electrically insulating material, such as plastics.

For example, as illustrated in the embodiment of figures 1-7, the tank 12 of the power transformer 11 contains a liquid, e.g. a mineral or vegetal oil, as electrically insulating medium 13, while the electrically insulating medium 202 inside the inner closed space 201 is a gas, e.g. SF6.

In this case, a barrier 5, made for example of plastics, is placed at the interface between the two insulating media 13, 202.

In particularly, according to a preferred embodiment illustrated for example in figure 4-6 and 12, the barrier 5 comprises a dome-shaped body which is connected at one side to the second housing 12 and at the other side to the conducting portion 15 associated with the second electrical device 14 of the second electrical apparatus 11.

In practice, with reference for example to the embodiments of figures 4-6 and 9-12, when it is necessary to operatively connect a first electrical apparatus 1 with a second electrical apparatus 2, the various components of the connection device 200 previously described are connected to the respective housings 2 and 12 (or components attached thereto); in particular (in whichever order), the first flange component 221 is for example mechanically connected to the housing 2 of the first electrical apparatus 1 with the first connector 211 inside it; the first conductor 211 is mechanically connected to a conductive component 16 of the first apparatus 1 so as to be in electrical connection with the electrical device 14 positioned inside the housing 2, e.g. a circuit breaker and a disconnector as illustrated in the example of figure 15.

The second connector 212 is coupled to the conducting portion 15 which is electrically connected with the second electrical device 14 of the second electrical apparatus 11; the second flange component 222, with the third flange element 230 around it, is mechanically connected, for instance screwed, to the second housing 12, e.g.- as before mentioned - directly as illustrated in the embodiment of figures 4-6, or indirectly through the additional component 226 as illustrated in the embodiment of figures 10-12.

One of the two electrical apparatuses 1, 11 is moved towards the other so as the second connector 212 enters inside and gets into electrical surface contact with the first connector 211 up to the desired position where the flange components 222 and 230 mate with the first flange component 221 so as to surround the inner closed space 201; in this final position, a user can regulate the tie-rods 231 so as to fix the assembly 100 in the achieved configuration.

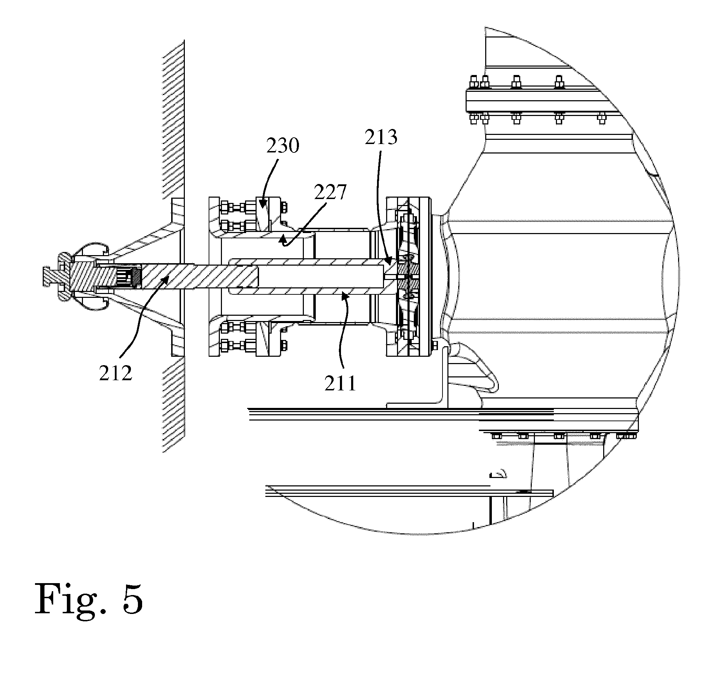

When, for whatever reason, it is necessary to separate one of the electrical apparatuses 1, 11 from the other, after shutting down power through the assembly 100, a user (starting from figure 4 or 10) can loosen the tie-rods 231, detach the second flange component 222 and slide it inside the first flange component 221 (figures 5 and 10). Then it is possible to grab the second conductor 212 and to detach it from the conducting portion 15 by sliding it inside the first conductor 211.

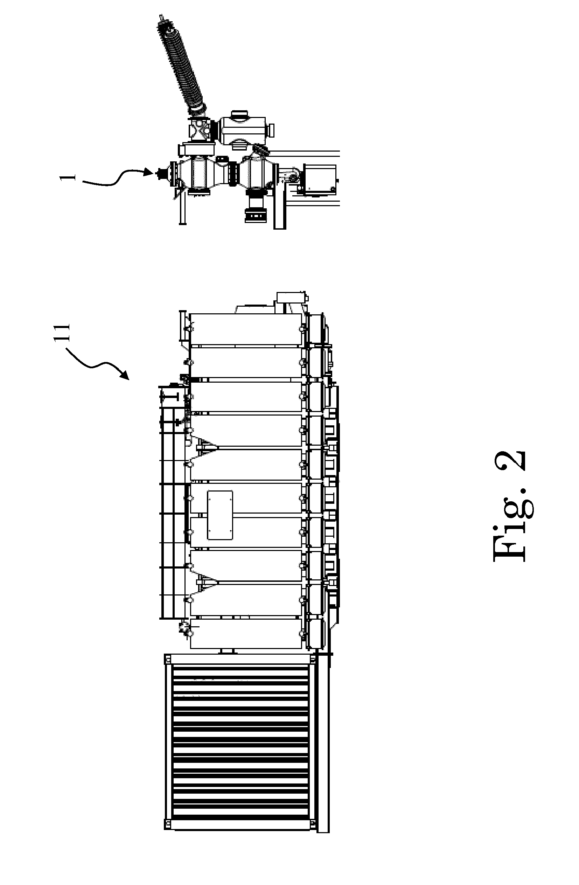

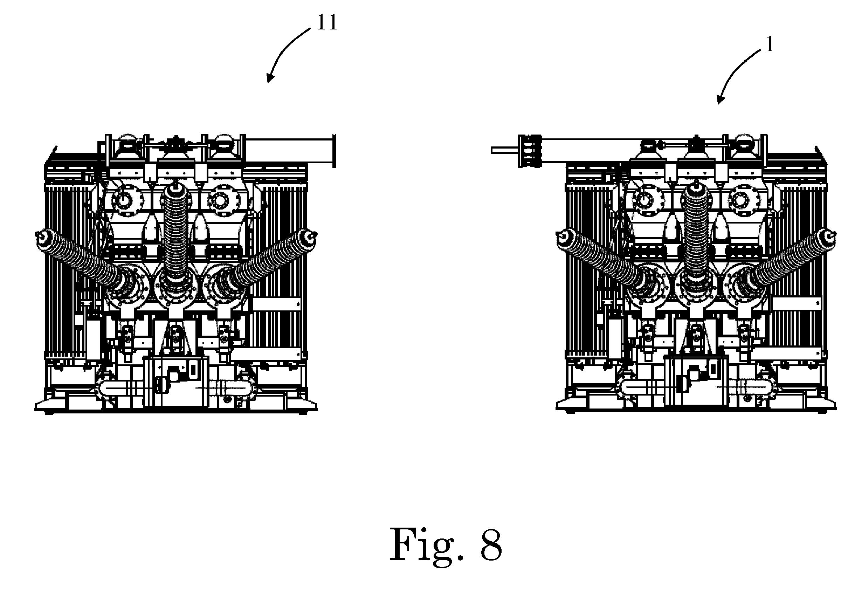

In this way, it is possible to draw the first electrical apparatus 1 away from the second electrical apparatus 11 (or vice-versa), as for example illustrated in figure 2 or figure 8. Hence, if necessary, the removed first electrical apparatus 1 can be replaced by another one almost immediately.

Likewise, in the embodiment of figures 13 and 14, once the tie-rods 231 are loosen and the second flange component 222 is detached and moved inside the first flange component 221, a user can un-screw the screws from the holes 240 and remove the half shells 215A and 215B; then it is possible to draw the first electrical apparatus 1 away from the second electrical apparatus 11 (or vice-versa), as for example illustrated in figure 2 or figure 8.

In practice, it has been found that the high or medium voltage electrical assembly 100 according to the present disclosure fully meets the desired aim since it allows to separate one electrical apparatus from another in a quite easy way, where, if necessary, the removed electrical apparatus can be replaced by another one almost immediately; in this way the out-of-work time of the entire assembly 100 is reduced substantially when compared to the current state of the art.

Such a result is achieved thanks to a structure easy to be realized and assembled, which makes the assembly 100 usable in principle in or for any type of electric power stations or substations, and in any type of electric grid.

Hence, the presence disclosure encompasses also an electric grid characterized in that it comprises at least one high or medium voltage electrical assembly as previously described and better defined in the appended claims.

In particular, thanks the connection device 200 previously described, it is possible to easily realize different layouts of electric stations or substations; for example, as illustrated in figure 7, two electrical apparatuses 1, 11 identical or similar to the first apparatus 1 of figure 1, can be operatively connected to each other; then, an additional connection device 200 can be used for connecting each of the first and second electrical apparatuses 1, 11 of figure 7 with a respective electrical apparatus, for example of the type indicated in the embodiment of figure 1 with the reference number 11, e.g. a power transformer.

Therefore, the present disclosure also encompasses an electric power substation suitable to be connected to a power line, characterized in that it comprises at least one high or medium voltage electrical assembly as previously described and better defined in the appended claims.

The assembly 100 thus conceived is susceptible of modifications and variations, all of which are within the scope of the inventive concept as defined in particular by the appended claims; any possible combination of the previously disclosed embodiments/alternatives, taken as whole or in part, can be implemented and has to be considered within the inventive concept of the present disclosure.

All the details may furthermore be replaced with technically equivalent elements and any of the previously described components may be differently shaped, or used in a different number or parts or elements, or the components previously described can be differently connected with respect to each other, provided they are suitable for the scope they are devised for.

For example, the various components of the connection device 200 may be differently shaped or sized, as for example illustrated in the embodiment of figures 7-12 where the length of some components of the connection device 200 is increased with respect to the length of the same components illustrated in the embodiment of figures 1-6.

Also the materials used, so long as they are compatible with the specific use and purpose, as well as the dimensions, may be any according to the requirements and the state of the art.

## Claims

1. A high or medium voltage electrical assembly (100) comprising at least:
- a first electrical apparatus (1) comprising a first housing (2) containing an associated insulating medium (3) and at least a first electrical device (4);
- a second electrical apparatus (11) comprising a second housing (12) containing a corresponding insulating medium (13) and at least a second electrical device (14); **characterized in that** it further comprises a connection device (200) operatively connecting said first electrical apparatus (1) with said second electrical apparatus (11) and configured so as to have an inner closed space (201) containing a related electrically insulating fluid (202), wherein said connection device (200) comprises at least outer telescopic means (220) which mechanically interconnect, in a removable manner, said first housing (2) with said second housing (12), and coupling means (210) which are positioned at least partially inside said inner closed space (201) and connect electrically, in a detachable manner, said at least first electrical device (4) with said at least second electrical device (14).

2. The high or medium voltage electrical assembly (100) according to claim 1, wherein said outer telescopic means (220) comprise a first flange component (221) which is suitable to be mechanically connected to said first housing (2) and a second flange component (222) which is suitable to be mechanically connected to said second housing (12), wherein said first and second flange components (221, 222) are mutually coupled so as to delimit said closed inner space (201) and to move one relative to the other when at least one of said first and second flange components (221, 222) is detached from the corresponding first or second housing (2, 12).

3. The high or medium voltage electrical assembly (100) according to claim 2, wherein said first flange component (221) has a first base portion (223) which is mechanically connected to said first housing (2) or to a component mechanically secured to said first housing (2), and a first sleeve-shaped portion (224) which protrudes from said first base portion (223) and surrounds at least partially said first connector (211), said first flange component (221) being suitable to move with said first housing (2) when separating said first electrical apparatus (1) from said second electrical apparatus (11).

4. The high or medium voltage electrical assembly (100) according to one or more of claims 2 and 3, wherein said second flange component (222) has a second base portion (225) which is connected to said second housing (12) or to a component (226) mechanically connected to said second housing (12), and a second sleeve-shaped portion (227) which protrudes from said second base portion (225) and is suitable to slide relative to said first sleeve-shaped portion (224) when the second flange component (222) is detached from said second housing (12) or from said component (226) mechanically connected to said second housing (12).

5. The high or medium voltage electrical assembly (100) according to one or more of the previous claims, wherein said connection device (200) further comprises a third flange element (230) which is positioned around the outer surface (228) of said second sleeve-shaped portion (227), and a plurality of tie-rods (231) which mechanically interconnect the third flange element (230) with said second base portion (225).

6. The high or medium voltage electrical assembly (100) according to one or more of the previous claims, wherein said coupling means (210) comprise a first connector (211) made of electrically conducting material which is suitable to be electrically connected to said at least first electrical device (4) of the first electrical apparatus (1), and a second connector (212) made of electrically conducting material which is suitable to electrically connect said first connector (211) with a corresponding electrically conducting portion (15) associated with said second electrical device (14) of the second electrical apparatus (11), and wherein said first and second connectors (211, 212) are mutually associated so as to move one relative to the other when separating said first electrical apparatus (1) from said second electrical apparatus (11).

7. The high or medium voltage electrical assembly (100) according to claim 6, wherein said second connector (212) is connected to said corresponding electrically conducting portion (15) associated with said second electrical device (14) of the second electrical apparatus (11) in a detachable manner.

8. The high or medium voltage electrical assembly (100) according to one or more of the previous claims wherein said first connector (211) comprises a hollow tubular body which is mechanically connected at one end portion (213) to and solidly movable with said first electrical apparatus (1), said first connector (211) being made of electrically conducting material and electrically connected to said at least first electrical device (4).

9. The high or medium voltage electrical assembly (100) according to one or more of the claims 6-8, wherein said first connector (211) and said second connector (212) are operatively coupled to each other in a telescopic manner.

10. The high or medium voltage electrical assembly (100) according to claim 9, wherein said second connector (212) comprises a rod-shaped body which is suitable to enter at least partially inside and to get in surface electrical contact with said hollow tubular element (211).

11. The high or medium voltage electrical assembly (100) according to claim 10, wherein said rod-shaped body (212) is inserted sliding inside said hollow tubular body of the first connector (211) between a first position where a free end (214) of the rod-shaped body (212) is electrically connected with a corresponding electrically conducting portion (15) associated to said second electrical device (14) and a second position where the rod-shaped body (212) is partially retracted inside said hollow tubular body (211) and said free end (214) is electrically disconnected from said corresponding electrically conducting portion (15).

12. The high or medium voltage electrical assembly (100) according to one or more of the claims 6-8, wherein said coupling means (210) comprise a third connector (215) which is made of electrically conducting material and is positioned between said first connector (211) and said second connector (212), said third connector (215) electrically interconnecting, in a detachable manner, said first and second connectors (211,212).

13. The high or medium voltage electrical assembly (100) according to claim 12, wherein said third connector (215) comprises two-half shells (215A, 215B) which are mechanically connected to each other and have end portions (216, 217) shaped so as to clamp associated end portions (218, 219) of said first connector (211) and said second connector (212), respectively.

14. The high or medium voltage electrical assembly (100) according to one or more of the previous claims, further comprising one or more separating barriers (5) positioned at the interface between two interfacing insulating media of said first, second and third insulating medium (3, 13, 202).

15. The high or medium voltage electrical assembly (100) according to claim 14, wherein, said one or more separating barriers (5) comprise a dome-shaped body made of plastics which is positioned at the interface between said second insulating medium (13) and said third insulating medium (202).

16. An electric grid **characterized in that** it comprises at least one high or medium voltage electrical assembly (100) according to one or more of the previous claims.

17. An electric power substation suitable to be connected to a power line, **characterized in that** it comprises at least one high or medium voltage electrical assembly (100) according to one or more of the previous claims.
